# FASCICULE DE BREVET EUROPEEN

(11) **EP 3 108 022 B1**
(45) Date de publication et mention de la délivrance du brevet: **31.03.2021**
(21) Numéro de dépôt: 15707065.7
(22) Date de dépôt: 19.02.2015
(51) Int. Cl.: C21D 8/06, C21D 9/52, C21D 9/573, C21D 1/18

(54) **PROCÉDÉ DE TRAITEMENT THERMIQUE À REFROIDISSEMENT CONTINU D'UN ÉLÉMENT DE RENFORT EN ACIER POUR PNEUMATIQUE**
VERFAHREN ZUR WÄRMEBEHANDLUNG MITTELS KONTINUIERLICHEN ABKÜHLENS EINES STAHLARMIERUNGSELEMENTS FÜR REIFEN
METHOD FOR HEAT TREATMENT WITH CONTINUOUS COOLING OF A STEEL REINFORCEMENT ELEMENT FOR TYRES

(30) Priorité: 21.02.2014 FR 1451378
(43) Date de publication de la demande: 28.12.2016
(73) Titulaire: Compagnie Générale des Etablissements Michelin, 63000 Clermont-Ferrand (FR)
(72) Inventeur: MORISOT, Pierre, F-63040 Clermont-Ferrand Cedex 9 (FR); FAUCHEUX, Elisabeth, F-63040 Clermont-Ferrand Cedex 9 (FR); RENAUX, Benoît, F-63040 Clermont-Ferrand Cedex 9 (FR); COLIN, Eric, F-63040 Clermont-Ferrand Cedex 9 (FR)
(74) Mandataire: Louret, Sylvain
(86) Numéro de dépôt international: PCT/EP2015/053454
(87) Numéro de publication internationale: WO 2015/124652

(56) Documents cités:
- WO-A1-91/00368
- FR-A- 1 429 755
- FR-A1- 2 324 745
- LU-A1- 69 039

## Description

L'invention concerne un procédé de traitement thermique d'un élément de renfort en acier pour pneumatique.

On connait de l'état de la technique un procédé de fabrication d'un élément de renfort en acier pour pneumatique, par exemple un fil en acier.

Le procédé de fabrication permet de fabriquer à partir d'un fil, dit fil machine, de diamètre initial compris entre 4,5 et 7,5 mm, un fil utilisable pour la fabrication d'un pneumatique, notamment un fil utilisable pour le renforcement de nappes du pneumatique, le fil présentant un diamètre compris entre 0,08 mm et 0,50 mm.

Tout d'abord, on tréfile, par exemple en milieu sec, le fil machine de microstructure majoritairement perlitique de façon à réduire son diamètre initial vers un diamètre intermédiaire, par exemple égal à 1,3 mm. A l'issue de cette étape de tréfilage, l'acier du fil présente une microstructure comprenant plusieurs phases mélangées.

Puis, on traite thermiquement le fil de diamètre intermédiaire de façon à modifier la microstructure de l'acier. En l'espèce, on régénère la microstructure majoritairement perlitique de l'acier.

Après avoir revêtu le fil de diamètre intermédiaire d'une couche métallique, on tréfile, par exemple en milieu humide, le fil de diamètre intermédiaire revêtu de façon à réduire son diamètre vers un diamètre final, par exemple égal à 0,20 mm.

On connait de US4767472 un procédé de traitement thermique du fil de diamètre intermédiaire comprenant trois étapes et mis en œuvre au moyen d'une installation de traitement thermique.

L'installation de traitement thermique comprend, dans le sens de défilement du fil, des moyens amont de stockage du fil non traité, par exemple des bobines amont, un dispositif de chauffage, un dispositif de refroidissement et des moyens avals de stockage du fil traité, par exemple des bobines avales.

Lors d'une première étape, on augmente la température du fil au-delà de la température d'austénitisation de l'acier pour obtenir une microstructure majoritairement austénitique. A cet effet, l'installation comprend un dispositif de chauffage du fil comprenant un four à gaz.

Puis, dans une deuxième étape réalisée en aval du four à gaz, on abaisse la température du fil dans le domaine de stabilité austénitique. A cet effet, l'installation comprend un dispositif de refroidissement comprenant un bain d'eau. Le bain comprend de l'eau liquide sensiblement pure à une température supérieure à 80°C dans lequel on fait défiler le fil.

Dans une troisième étape réalisée en aval du bain, on laisse la température du fil s'abaisser à l'air ambiant ou bien dans un dispositif thermiquement isolé. Lors de cette exposition à l'air ambiant, on transforme la microstructure majoritairement austénitique en une microstructure majoritairement perlitique ou bien on poursuit la transformation initiée préalablement dans le bain en passant par au travers du domaine de transformation perlitique.

Toutefois, le procédé de US4767472 nécessite un pilotage précis des vitesses de refroidissement dans les différents domaines.

En effet, il est nécessaire de contrôler très précisément la vitesse d'abaissement de la température dans le domaine austénitique afin de rentrer dans les domaines de transformation à une température prédéterminée relativement précise. En utilisant une vitesse d'abaissement trop élevée, on risque d'effectuer la transformation en passant au travers des domaines de transformation martensitique et/ou bainitique qui conduirait à un fil relativement cassant et donc inutilisable lors d'une étape ultérieure de tréfilage. En utilisant une vitesse d'abaissement trop faible, on risque d'obtenir une quantité trop importante de ferrite qui conduirait à un fil présentant des propriétés mécaniques peu élevées, notamment de force à rupture.

D'autre part, il est nécessaire de passer au travers des domaines de transformation sans variation importante de la température du fil, en tenant notamment compte de la recalescence. Dans le cas contraire, on crée des hétérogénéités de structure conduisant à une perte de résistance mécanique de l'acier et à une moindre processabilité, notamment une moindre capacité d'écrouissage de l'acier.

L'invention a pour but un procédé plus robuste et plus simple à piloter.

A cet effet, l'invention a pour objet un procédé de traitement thermique d'un élément de renfort en acier pour pneumatique, le procédé comprenant une étape d'abaissement de la température de l'élément de renfort par refroidissement continu :
- depuis une température initiale du domaine austénitique de stabilité initial de l'acier,
- jusqu'à une température finale du domaine ferrito-perlitique de stabilité final de l'acier,
- en passant dans au moins un domaine de transformation de l'acier, le ou les domaines de transformation étant distincts du domaine bainitique,
l'étape d'abaissement de la température comprenant une transformation de la microstructure de l'acier depuis la microstructure austénitique vers la microstructure ferrito-perlitique, la température de l'élément de renfort étant strictement décroissante pendant l'étape d'abaissement, la vitesse moyenne d'abaissement de la température pendant la transformation de la microstructure de l'acier étant supérieure ou égale à 30°C·s⁻¹ et inférieure ou égale à 110°C·s⁻¹.

Le procédé selon l'invention est relativement robuste et simple à piloter.

En effet, contrairement au procédé décrit dans US4767472 et à certains procédés de traitement thermique de l'état de la technique, dits à transformation isotherme (en abrégé « TTI » pour traitement thermique isotherme), dans lesquels la transformation de l'acier se déroule à température sensiblement constante, le procédé selon l'invention est à refroidissement continu (en abrégé « TTRC » pour traitement thermique à refroidissement continu). On distingue facilement les deux types de procédés, notamment grâce aux diagrammes temps-température utilisés pour les représenter. Un procédé de type TTI utilise un diagramme TTT (temps-température-transformation) et comprend un ou plusieurs changements de vitesse lors de l'étape d'abaissement de la température. Un procédé de type TTRC utilise un diagramme TRC (transformation à refroidissement continu) et présente une vitesse continue lors de l'étape d'abaissement de la température. Ainsi, entre autres caractéristiques d'un procédé de type TTRC, on abaisse la température de l'élément de renfort pendant la transformation de la microstructure de l'acier.

Dans le procédé selon l'invention, une fois la vitesse d'abaissement de la température définie, il est alors relativement aisé de la contrôler compte tenu de sa continuité lors de l'étape d'abaissement de la température.

En outre, contrairement aux procédés de type TTI dans lesquels on apporte un nombre très élevé de calories à l'élément de renfort pour le maintenir à température sensiblement constante lors de la transformation, le procédé selon l'invention, en étant du type TTRC, permet de réduire la consommation énergétique du procédé.

Dans la présente description, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Dans un mode de réalisation, la vitesse moyenne d'abaissement de la température pendant la transformation de la microstructure de l'acier est supérieure ou égale à 40'C·s⁻¹, de préférence à 50°C·s⁻¹, plus préférentiellement à 60°C·s⁻¹ et encore plus préférentiellement à 70°C·s⁻¹.

L'utilisation d'une vitesse d'abaissement moyenne trop faible ne permet pas d'effectuer rapidement la transformation de la microstructure de l'acier. Ainsi, on minimise le risque d'obtenir un acier présentant des propriétés mécaniques non désirées.

Dans un mode de réalisation, la vitesse moyenne d'abaissement de la température pendant la transformation de la microstructure de l'acier est inférieure ou égale à 100°C·s⁻¹ et plus préférentiellement à 90°C·s⁻¹.

L'utilisation d'une vitesse d'abaissement trop élevée présente le risque de conduire à une trempe de l'acier qui selon les propriétés désirées de l'acier, n'est pas souhaitable.

Par vitesse moyenne d'abaissement, on entend le rapport de la différence en degrés Celsius entre la température avant transformation et après transformation sur le temps mis pour effectuer la transformation.

Ainsi, on pourra envisager plusieurs modes de réalisation dans lesquels la vitesse moyenne d'abaissement est comprise dans des intervalles allant de 30°C·s⁻¹ à 90°C·s⁻¹, de 30°C·s⁻¹ à 100°C·s⁻¹, de 30°C·s⁻¹ à 110°C·s⁻¹, de 40°C·s⁻¹ à 90°C·s⁻¹, de 40°C·s⁻¹ à 100°C·s⁻¹, de 40°C·s⁻¹ à 110°C·s⁻¹,de 50°C·s⁻¹ à 90°C·s⁻¹, de 50°C·s⁻¹ à 100°C·s⁻¹, de 50°C·s⁻¹ à 110°C·s⁻¹, de 60°C·s⁻¹ à 90°C·s⁻¹, de 60°C·s⁻¹ à 100°C·s⁻¹, de 60°C·s⁻¹ à 110°C·s⁻¹, de 70°C·s⁻¹ à 90°C·s⁻¹, de 70°C·s⁻¹ à 100°C·s⁻¹ et de 70°C·s⁻¹ à 110°C·s⁻¹.

Dans un mode de réalisation, la température initiale est supérieure ou égale à 750°C, de préférence à 800°C et plus préférentiellement à 850°C.

Dans un mode de réalisation, la température finale est inférieure ou égale à 650°C, de préférence à 550°C et plus préférentiellement à 450°C.

Ainsi, on pourra envisager plusieurs modes de réalisation dans lesquels les couples température initiale/température finale sont 750°C/450°C, 750°C/550°C, 750°C/650°C, 800°C/450°C, 800°C/550°C, 800°C/650°C, 850°C/450°C, 850°C/550°C, 850°C/650°C.

Dans un mode de réalisation, la transformation de la microstructure de l'acier a lieu dans un intervalle de température allant de 800°C à 400°C, de préférence de 750°C à 500°C et plus préférentiellement de 650°C à 550°C.

Avantageusement, on abaisse la température de plus de 30°C, de préférence de plus de 50°C, plus préférentiellement de plus de 75°C et encore plus préférentiellement de plus 100°C pendant la transformation de la microstructure de l'acier.

L'expression « de plus de X °C » signifie que la température est abaissée d'une amplitude thermique strictement supérieure à X°C, la valeur de X°C étant donc exclue.

La micro-structure de l'acier est intégralement de la ferrite, de la perlite ou un mélange de ces microstructures.

Ainsi, la micro-structure de l'acier est dépourvue de martensite et/ou de bainite. Une microstructure ferrito-martensitique entraine des décohésions entre les phases ferritique et martensitique ce qui n'est pas souhaitable. Une microstucture martensitique n'est pas suffisamment ductile pour permettre un tréfilage du fil qui casserait trop fréquemment. Ainsi, de préférence, le ou les domaines de transformation sont distincts du domaine matensitique.

Une microstructure bainitique conduirait à un fil relativement cassant et donc inutilisable lors d'une étape ultérieure de tréfilage.

On distingue une micro-structure ferritique, perlitique ou ferrito-perlitique d'une autre micro-structure, en particulier martensitique ou bainitique par observation métallographique. La micro-structure ferrito-perlitique présente des grains de ferrite ainsi que des zones perlitiques lamellaires. Au contraire, la micro-structure martensitique comprend des lattes et/ou des aiguilles que l'homme du métier saura distinguer des grains et des lamelles des micro-structures ferrito-perlitique et perlitique.

Plus préférentiellement, la microstructure de l'acier est intégralement ferrito-perlitique.

Par microstructure intégralement ferritique, perlitique ou ferrito-perlitique, on entend, de façon connue par l'homme du métier, que l'acier comprend une phase ferritique, perlitique ou ferrito-perlitique dans une proportion en masse supérieure ou égale à 98% de cette phase par rapport à la somme des pourcentages des autres phases.

Avantageusement, l'étape d'abaissement de la température comprend un abaissement de la température de l'élément de renfort dans le domaine de stabilité initial de l'acier.

Avantageusement, l'étape d'abaissement de la température comprend un abaissement de la température de l'élément de renfort dans le domaine de stabilité final de l'acier.

Dans un mode de réalisation, on transforme la microstructure de l'acier par traversée d'au moins un domaine de transformation.

Avantageusement, la température d'entrée dans le domaine de transformation, c'est-à-dire la température délimitant le passage entre le domaine de stabilité initial et le domaine de transformation, est supérieure ou égale à 550°C, de préférence à 600°C, plus préférentiellement à 650°C et encore plus préférentiellement à 700°C.

Avantageusement, la température de sortie du domaine de transformation, c'est-à-dire la température délimitant le passage entre le domaine de transformation et le domaine de stabilité final, est supérieure ou égale à 400°C, de préférence à 500°C,plus préférentiellement à 600°C et encore plus préférentiellement à 650°C.

Dans un mode de réalisation préféré, le domaine de transformation comprend le domaine de transformation ferritique.

Dans un mode de réalisation préféré, le domaine de transformation comprend le domaine de transformation perlitique.

Dans un mode de réalisation, préalablement à l'étape d'abaissement de la température de l'élément de renfort, le procédé comprend une étape d'augmentation de la température de l'élément de renfort à une température supérieure ou égale à la température d'austénitisation de l'acier.

En chauffant l'acier au-delà de la température d'austénitisation de l'acier, on obtient une microstructure majoritairement austénitique, voire totalement austénitique.

Avantageusement, la vitesse moyenne de défilement de l'élément de renfort est strictement supérieure à 40 m·min⁻¹, de préférence strictement supérieure à 90 m·min⁻¹, plus préférentiellement supérieure ou égale à 200 m·min⁻¹ et encore plus préférentiellement supérieure ou égale à 300 m·min⁻¹.

Par vitesse moyenne, il faut comprendre le rapport de la distance parcourue par un point de l'élément de renfort sur le temps mis par ce point pour parcourir cette distance.

Contrairement au procédé décrit dans US4767472 et aux procédés de type TTI nécessitant nécessairement un temps de transformation relativement long, par exemple de l'ordre de plusieurs dizaine de secondes, la transformation dans un procédé de type TTRC peut être relativement courte, par exemple de l'ordre de quelques secondes, ce qui permet d'utiliser des vitesses de défilement élevées dans une installation présentant un encombrement réduit.

Optionnellement, on apporte des calories à l'élément de renfort pendant au moins une partie de l'étape d'abaissement de la température de l'élément de renfort.

L'apport de calories à l'élément de renfort permet de piloter l'abaissement de la température de l'élément de renfort et donc d'obtenir la microstructure désirée de l'acier. En particulier, l'apport des calories permet de ne pas abaisser trop rapidement la température ce qui conduirait à la création de phases non désirées dans la microstructure de l'acier.

Contrairement à l'apport de calories d'un procédé de type TTI, l'apport de calories du procédé est relativement faible car il n'a pas pour but de maintenir la température de l'élément de renfort constante.

Selon d'autres caractéristiques optionnelles du procédé :
- L'élément de renfort en acier est un fil d'acier.
- Le fil d'acier présente un diamètre compris allant de 0,5 à 5,5 mm, de préférence de 0,5 à 3 mm et plus préférentiellement de 1 à 2,5 mm.
- L'acier comprend de 0,4 % à 1,2 %, de préférence de 0,4 % à 1 % et plus préférentiellement de 0,4% à 0,8% de carbone en masse.

L'invention sera mieux comprise à la lecture de la description qui va suivre, donnée uniquement à titre d'exemple non limitatif et faite en se référant aux dessins dans lesquels:
- la figure 1 est un schéma d'une installation de traitement thermique selon un premier mode de réalisation pour la mise en oeuvre du procédé selon l'invention;
- la figure 2 est un schéma d'un dispositif de chauffage de l'installation de la figure 1 ;
- la figure 3 est un schéma d'un dispositif de maintien en température de l'installation de la figure 1 ;
- la figure 4 est un schéma d'un dispositif de refroidissement de l'installation de la figure 1 ;
- la figure 5 est une vue en coupe selon V-V du dispositif de refroidissement de la figure 4 ;
- la figure 6 est un diagramme illustrant différentes étapes d'un procédé de fabrication d'un élément de renfort comprenant des étapes d'un procédé de traitement thermique selon l'invention;
- la figure 7 est un diagramme temps-température TRC illustrant le procédé de traitement thermique de la figure 6; et
- la figure 8 est un schéma d'une installation de traitement thermique selon un deuxième mode de réalisation.

### EXEMPLE D'UNE INSTALLATION DE TRAITEMENT THERMIQUE POUR LA MISE EN ŒUVRE DU PROCEDE SELON L'INVENTION

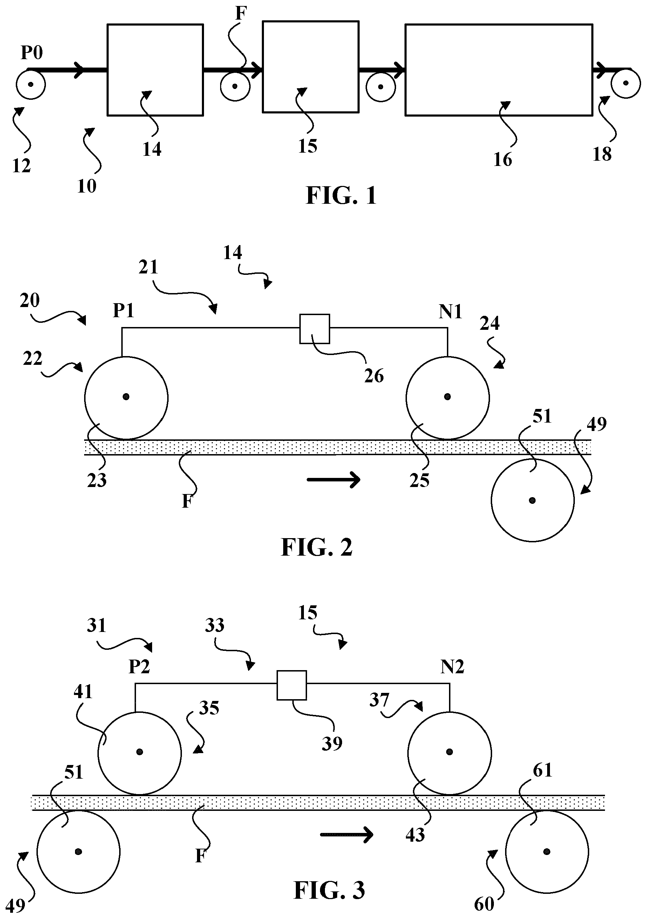

On a représenté sur la figure 1 un premier mode de réalisation d'une installation de traitement thermique d'un élément de renfort pour pneumatique, désignée par la référence générale 10.

L'installation de traitement 10 est apte à traiter des éléments de renfort F en acier, ici des fils d'acier. Les fils d'aciers F présentent un diamètre allant de 0,5 à 5,5 mm, de préférence de 0,7 à 3 mm et plus préférentiellement de 1 à 2,5 mm.

L'installation 10 comprend, dans le sens du défilement de l'élément F dans l'installation 10, d'amont en aval, des moyens 12 de stockage amont de l'élément F, un dispositif 14 de chauffage de l'élément F, un dispositif 15 de maintien en température de l'élément F, un dispositif 16 de refroidissement de l'élément F et des moyens 18 de stockage avals de l'élément F traité thermiquement.

Les moyens amont 12 et aval 18 de stockage comprennent chacun une bobine de stockage de l'élément F permettant respectivement de dérouler et d'enrouler l'élément F. Dans les moyens de stockage amont 12, l'élément F est alors relié au potentiel P0.

On a représenté sur la figure 2 le dispositif de chauffage 14. Le dispositif 14 permet de chauffer l'élément F à une température supérieure ou égale à la température d'austénitisation de l'acier.

Le dispositif de chauffage 14 comprend des moyens 20 d'apport de calories vers l'élément F. Les moyens d'apport de calories 20 comprennent des moyens d'apport de calories 21 par effet joule au travers de l'élément F. Ces moyens d'apport de calories 21 comprennent deux bornes 22, 24 électriquement conductrices alimentées par une source de courant, ici un transformateur 26. Chaque borne 22, 24 est respectivement reliée à la phase P1 et au neutre N1. En l'espèce, chaque borne 22, 24 comprend respectivement une poulie 23, 25 rotative électriquement conductrice. Chaque borne 22, 24 est agencée de sorte que chaque poulie 23, 25 est au contact de l'élément F lors du fonctionnement de l'installation 10.

On a représenté sur la figure 3 le dispositif 15 de maintien en température. Le dispositif 15 est agencé entre le dispositif de chauffage 14 et le dispositif de refroidissement 16 et permet de maintenir la température de l'élément F à une température supérieure ou égale à la température d'austénitisation de l'acier.

Le dispositif de maintien 15 comprend des moyens 31 d'apport de calories vers l'élément F. Les moyens d'apport de calories 31 comprennent des moyens d'apport de calories 33 par effet joule au travers de l'élément F. Ces moyens d'apport de calories 31 comprennent deux bornes 35, 37 électriquement conductrices alimentées par une source de courant, ici un transformateur 39. Chaque borne 35, 37 est respectivement reliée à la phase P2 et au neutre N2. En l'espèce, chaque borne 35, 37 comprend respectivement une poulie 41, 43 rotative électriquement conductrice. Chaque borne 35, 37 est agencée de sorte que chaque poulie 41, 43 est au contact de l'élément F lors du fonctionnement de l'installation 10.

L'installation 10 comprend également des moyens 49 de sollicitation de l'élément F contre les bornes 24, 35 et plus précisément au contact des poulies 25, 41. Les moyens de sollicitation 49 comprennent ici une poulie rotative 51.

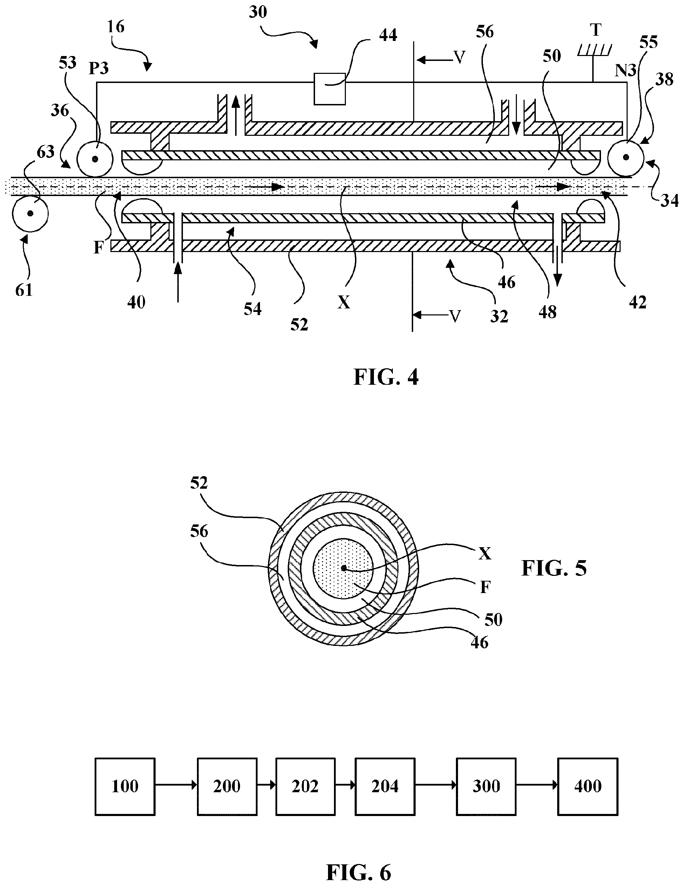

On a représenté sur les figures 4 et 5 le dispositif de refroidissement 16.

Le dispositif de refroidissement 16 comprend des moyens 30 d'apport de calories à l'élément F et des moyens 32 d'extraction de calories de l'élément F vers au moins une source froide, ici deux sources froides. La ou les sources froides sont distinctes de l'air ambiant.

Les moyens d'apport de calories 30 comprennent des moyens d'apport de calories 34 par effet joule au travers de l'élément F. Les moyens d'apport de calories 34 comprennent deux bornes 36, 38 électriquement conductrices disposées respectivement en amont et en aval d'une entrée 40 et d'une sortie 42 de l'élément F du dispositif de refroidissement 16. Chaque borne 36, 38 est respectivement reliée à la phase P3 et au neutre N3, le neutre N3 étant au même potentiel que la terre T. Chaque borne 36, 38 comprend respectivement une poulie rotative 53, 55 électriquement conductrice. Les moyens d'apport de calories 34 comprennent également une source de courant, ici un transformateur 44, alimentant les deux bornes 36, 38. Chaque borne 36, 38 est agencée de sorte que chaque poulie 53, 55 est au contact de l'élément F par l'intermédiaire respectivement des poulies 53, 55 lors du fonctionnement de l'installation 10.

L'installation 10 comprend également des moyens 61 de sollicitation de l'élément F contre les bornes 37, 36 et plus précisément au contact des poulies 53, 55. Les moyens de sollicitation 61 comprennent ici une poulie rotative 63.

Les moyens d'extraction de calories 32 sont du type à échange par convection entre l'élément F et la ou les sources froides.

Les moyens d'extraction de calories 32 comprennent une enceinte 46 de défilement de l'élément F. L'enceinte de défilement 46 forme une chemise et présente une forme générale à symétrie axiale par rapport à l'axe X de défilement de l'élément F, en l'espèce à section générale circulaire. L'enceinte de défilement 46 contient une source froide intermédiaire 48. L'échange de chaleur entre l'élément F et la source froide intermédiaire 48 se fait par convection, ici par convection forcée en raison de la circulation de la source froide intermédiaire 48 dans l'enceinte de défilement 46 d'amont en aval dans le sens de défilement de l'élément F. En variante, la source froide est dépourvue de convection forcée. Par exemple, la source froide intermédiaire 48 comprend un gaz 50 d'échange thermique. De préférence, le gaz 50 est sélectionné parmi les gaz réducteurs, les gaz neutres et les mélanges de ces gaz. Plus préférentiellement, le gaz 50 est un gaz réducteur, ici du dihydrogène H₂. En variante, le gaz 50 comprend plusieurs constituants gazeux, par exemple un mélange H₂+N₂. Dans une autre variante, le gaz 50 est du nitrogène N₂.

Les moyens d'extraction de calories 32 comprennent également une enceinte 52 de circulation d'une source froide externe 54. L'enceinte de circulation 52 forme une chemise et présente une forme générale à symétrie axiale par rapport à l'axe X de défilement de l'élément F, en l'espèce à section générale circulaire. L'enceinte de circulation 52 est radialement externe par rapport à l'enceinte de défilement 46 et agencée autour de cette dernière. La source froide intermédiaire 48 est agencée entre l'élément F et la source froide externe 54. L'échange de chaleur entre la source froide intermédiaire 48 et la source froide externe 54 se fait par convection, ici par convection forcée en raison de la circulation de la source froide externe 54 dans l'enceinte de circulation 52, d'aval en amont dans le sens de défilement de l'élément F.

Par exemple, la source froide externe 54 comprend un liquide 56 d'échange thermique, ici de l'eau.

Les moyens d'apport de calories 30 et d'extraction de calories 32 sont agencés de sorte que la température de l'élément F à la sortie 42 est strictement inférieure à la température de l'élément F à l'entrée 40.

### EXEMPLE DE PROCEDE DE TRAITEMENT THERMIQUE SELON L'INVENTION

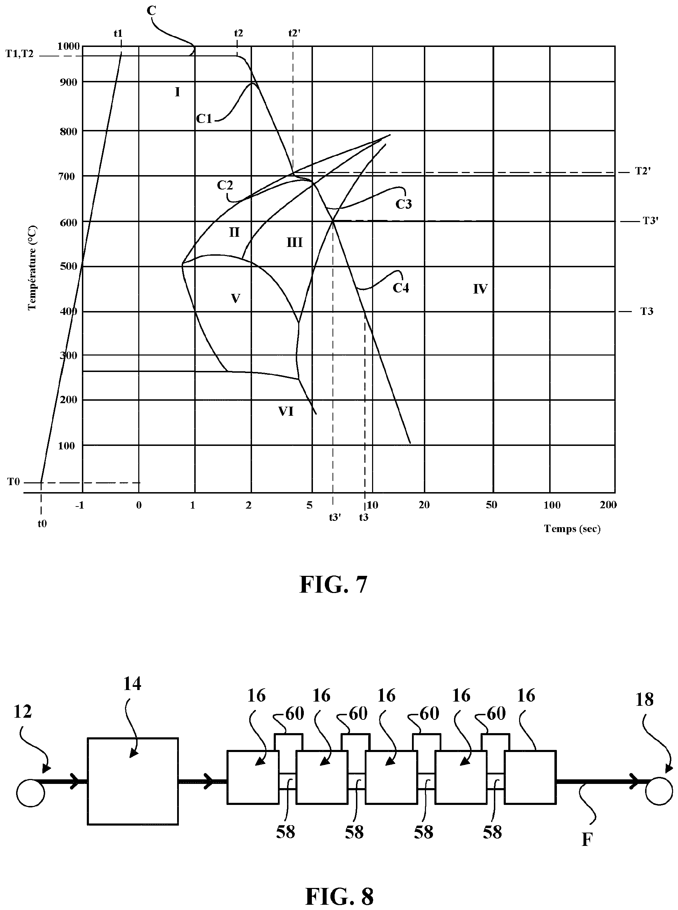

Nous allons maintenant décrire un exemple de procédé de traitement thermique de l'élément de renfort en acier F pour pneumatique en référence aux figures 6 et 7 dans le cadre d'un procédé de fabrication de l'élément F.

L'acier comprend par exemple de 0,4 % à 1,2 %, de préférence de 0,4 % à 1 % et plus préférentiellement de 0,4 % à 0,8 % de carbone en masse. L'acier peut également comprendre des éléments d'addition spécifiques tels que Cr, Ni, Co, V, ou divers autres éléments connus (voir par exemple Research Disclosure 34984 - "Micro-alloyed steel cord constructions for tyres" - mai 1993 ; Research Disclosure 34054 - "High tensile strength steel cord constructions for tyres " - août 1992). En l'espèce, on utilise un acier classique à 0,7% de carbone.

Préalablement au procédé de traitement thermique, on tréfile, par exemple, en milieu sec, l'élément F de façon à réduire son diamètre initial égal à 5,5 mm vers un diamètre intermédiaire, ici égal à 1,3 mm dans une étape 100. A l'issue de cette étape de tréfilage 100, l'acier de l'élément F présente une microstructure comprenant plusieurs phases mélangées.

On met alors en oeuvre le procédé de traitement thermique selon l'invention dans lequel on traite thermiquement l'élément F de diamètre intermédiaire de façon à modifier la microstructure de l'acier. En l'espèce, on régénère la microstructure majoritairement perlitique.

Le procédé de traitement thermique comprend une étape 200 d'augmentation de la température de l'élément F depuis une température T0 jusqu'à une température T1 supérieure ou égale à la température d'austénitisation de l'acier. Comme illustré sur la figure 7, cette étape dure de t0 jusqu'à t1 et est mise en œuvre grâce au dispositif de chauffage 14.

Au cours d'au moins une partie de cette étape 200, on apporte des calories à l'élément F par effet joule au travers de l'élément F. Chaque borne 22, 24 est au contact de l'élément F lors de cette étape 200.

On augmente la température de l'élément F depuis T0 jusqu'à T1 à une vitesse moyenne d'augmentation allant de 100 à 1000°C·s⁻¹, de préférence 500 à 950°C·s⁻¹ et plus préférentiellement de 700 à 900°C·s⁻¹. Ici, la vitesse d'augmentation est égale à 836°C·s⁻¹.

De préférence, T0 est inférieure ou égale à 100°C et plus préférentiellement à 50°C. Ici, T0=20°C. De préférence, T1 est supérieure ou égale à 850°C et plus préférentiellement à 900°C. Ici, T1=975°C.

Le procédé comprend une étape 202 de maintien de la température de l'élément F à une température supérieure ou égale à la température T1. Comme illustré sur la figure 7, cette étape 202 dure de t1 à t2 et est mise en œuvre grâce au dispositif de maintien de la température 15.

En variante, le procédé peut ne pas comprendre d'étape 202 de maintien de la température de l'acier à la température d'austénitisation de l'acier. Ainsi, on pourra envisager un procédé sans étape de maintien en température, c'est-à-dire dans lequel on effectue consécutivement les étapes d'augmentation de la température de l'élément F depuis une température T0 jusqu'à une température T1 supérieure ou égale à la température d'austénitisation de l'acier et d'abaissement de la température décrite ci-dessous. Dans cette variante, l'installation 10 ne comprend pas de dispositif 15 agencé entre le dispositif de chauffage 14 et le dispositif de refroidissement 16.

Puis, l'élément F arrive à l'entrée 40 des moyens d'extraction de calories 32 du dispositif 16 au temps t2. Le procédé comprend alors une étape 204 d'abaissement de la température de l'élément F par refroidissement continu depuis une température initiale T2 jusqu'à une température finale T3. Comme illustré sur la figure 7, cette étape 204 dure de t2 à t3 et est mise en oeuvre grâce au dispositif de refroidissement 16.

Pour abaisser la température depuis T2 jusqu'à T3, on extrait des calories de l'élément F par convection thermique au contact de la source froide intermédiaire 48, dans l'exemple grâce aux moyens d'extraction de calories 32.

On abaisse la température depuis T2 jusqu'à T3 à une vitesse moyenne d'abaissement supérieure ou égale à 30°C·s⁻¹. Avantageusement, on abaisse la température depuis T2 jusqu'à T3 à une vitesse moyenne d'abaissement supérieure ou égale à 40°C·s⁻¹, de préférence à 50°C·s⁻¹, plus préférentiellement à 60°C·s⁻¹ et encore plus préférentiellement à 70°C·s⁻¹. Dans ce mode de réalisation préféré, la vitesse d'abaissement est inférieure ou égale à 110°C·s⁻¹, de préférence à 100°C·s⁻¹ et plus préférentiellement à 90°C·s⁻¹.

Dans l'exemple décrit, T2 est supérieure ou égale à 750°C, de préférence à 800°C et plus préférentiellement à 850°C. Ici, T2=T1=975°C.

Dans l'exemple décrit, T3 est inférieure ou égale à 650°C, de préférence à 550°C et plus préférentiellement à 450°C. Ici T3=400°C.

De préférence, on apporte des calories à l'élément F pendant au moins une partie de l'étape d'abaissement 204, dans l'exemple grâce aux moyens d'apport de calories 34 par effet joule au travers de l'élément F qui est alors au contact des bornes 36, 38.

La température de l'élément de renfort F est strictement décroissante pendant l'étape d'abaissement 204.

L'étape 204 d'abaissement de la température est postérieure à l'étape 202 de maintien de la température qui est elle-même postérieure à l'étape 200 d'augmentation de la température.

On fait défiler l'élément F à une vitesse moyenne de défilement de préférence strictement supérieure à 40 m·min⁻¹, de préférence strictement supérieure à 90 m·min⁻¹, plus préférentiellement supérieure ou égale à 200 m·min⁻¹ et encore plus préférentiellement supérieure ou égale à 300 m·min⁻¹. Ici, la vitesse de défilement est égale à 315 m·min⁻¹.

La température d'entrée de l'eau est comprise entre 20°C et 40°C, et ici sensiblement égale à 15°C. La température d'entrée du gaz est sensiblement égale à 20°C.

L'élément F arrive alors à la sortie 42 des moyens d'extraction de calories 32 du dispositif 16 au temps t3. L'élément F obtenu par le procédé présente dans cet exemple une résistance à la rupture Rm égale à 1150 MPa.

Postérieurement au procédé de traitement thermique, dans une étape 300, on revêt l'élément F de diamètre intermédiaire traité thermiquement d'une couche métallique, par exemple d'une couche de laiton.

Puis, dans une étape 400, on tréfile, par exemple, en milieu humide l'élément F de diamètre intermédiaire traité thermiquement revêtu de façon à réduire son diamètre vers un diamètre final, par exemple égal à 0,23 mm.

On pourra utiliser l'élément F ainsi obtenu en tant que fil unitaire pour le renforcement de nappes de pneumatique ou bien pour la fabrication d'un câble à couches ou bien d'un câble à toron pour le renforcement de nappes de pneumatique.

On a illustré le procédé de traitement thermique sur la figure 7 par une courbe C représentant la variation de la température de l'élément F en fonction du temps. Nous allons décrire l'étape d'abaissement 204 en référence à la figure 7.

La température initiale T2 appartient à un domaine de stabilité initial de l'acier, ici le domaine de stabilité austénitique I dans lequel l'acier présente une microstructure majoritairement austénitique.

La température finale T3 appartient à un domaine de stabilité final de l'acier, ici le domaine de stabilité perlitique IV dans lequel l'acier présente une microstructure majoritairement perlitique.

L'étape d'abaissement 204 comprend un abaissement de la température de l'élément F dans le domaine de stabilité initial, ici dans le domaine de stabilité austénitique. Cet abaissement est illustré par la partie C1 de la courbe C entre les points (t2, T2) et (t2', T2').

Puis, l'étape d'abaissement 204 comprend une transformation de la microstructure de l'acier depuis la microstructure du domaine initial, ici austénitique, vers une microstructure du domaine final, ici ferrito-perlitique. On transforme la microstructure de l'acier par traversée d'au moins un domaine de transformation. En l'espèce, on traverse successivement les domaines de transformation ferritique II (partie C2 de la courbe C) et perlitique III (partie C3 de la courbe C) entre les points (t2', T2') et (t3', T3'). Les domaines de transformation de l'acier sont distincts du domaine bainitique et de préférence, du domaine martensitique.

Cette transformation de la microstructure de l'acier a lieu dans un intervalle de températures [T2', T3'] allant de 800°C à 400°C, de préférence de 750°C à 500°C et plus préférentiellement de 650°C à 550°C. La température T2' d'entrée dans le domaine de transformation ferritique II, c'est-à-dire la température délimitant le passage entre le domaine de stabilité initial I et le domaine de transformation ferritique II, est supérieure ou égale à 550°C, de préférence à 600°C, plus préférentiellement à 650°C et encore plus préférentiellement à 700°C. La température T3' de sortie du domaine de transformation perlitique III, c'est-à-dire la température délimitant le passage entre le domaine de transformation perlitique III et le domaine de stabilité final IV, est supérieure ou égale à 400°C, de préférence à 500°C, plus préférentiellement à 600°C et encore plus préférentiellement à 650°C. En l'espèce, T2'=710°C et T3'=600°C

Pendant cette transformation de la microstructure de l'acier, on abaisse la température de l'élément F, simultanément en extrayant des calories de l'élément F par convection thermique au contact de la source froide intermédiaire 48 et en apportant des calories à l'élément F par effet joule au travers de l'élément F. Afin d'abaisser la température de l'élément F, on extrait plus de calories que l'on en apporte.

Pendant cette transformation de la microstructure de l'acier, on abaisse la température de l'élément F par exemple de plus de 30°C, de préférence de plus de 50°C, plus préférentiellement de plus de 75°C et encore plus préférentiellement de plus de 100°C. En l'espèce, on abaisse la température de 123°C.

Pendant cette transformation, la vitesse moyenne d'abaissement de la température est supérieure ou égale à 30°C·s⁻¹. Avantageusement, la vitesse moyenne d'abaissement de la température est supérieure ou égale à 40°C·s⁻¹, de préférence à 50°C·s⁻¹, plus préférentiellement à 60°C·s⁻¹ et encore plus préférentiellement à 70°C·s⁻¹.

Pendant cette transformation, la vitesse moyenne d'abaissement de la température est inférieure ou égale à 110°C·s⁻¹, de préférence à 100°C·s⁻¹ et plus préférentiellement à 90°C·s⁻¹.

En l'espèce, la vitesse moyenne d'abaissement de la température est égale à 86°C·s⁻¹.

Ensuite, l'étape d'abaissement 204 comprend un abaissement de la température de l'élément F dans le domaine de stabilité final, ici le domaine de stabilité perlitique. Cet abaissement est illustré par la partie C4 de la courbe C entre les points (t3', T3') et (t3, T3).

On notera que le procédé selon l'invention est à refroidissement continu. Ainsi, comme illustré sur le diagramme TRC de la figure 7, il n'y a pas de variation brutale de la vitesse de refroidissement de l'élément F entre les températures T2 et T3. En outre, la transformation a intégralement lieu entre l'entrée 40 et la sortie 42 du dispositif de refroidissement 16. En d'autres termes, l'élément F quitte le domaine de stabilité initial en aval de l'entrée 40 et en amont de la sortie 42 et atteint le domaine de stabilité final en aval de l'entrée 40 et en amont de la sortie 42.

En transformant la microstructure de l'acier entre l'entrée 40 et la sortie 42 du dispositif de refroidissement 16, on limite, voire on évite la formation d'oxydes en surface de l'acier contrairement à un traitement thermique ayant lieu en totalité ou en partie en milieu oxydant, par exemple à l'air ambiant.

L'homme du métier est capable de distinguer les microstructures austénique, perlitique, bainitique, ferritique et martensitique précédemment décrites, notamment par observation microscopique sur des moyens connus, par exemple un microscope à balayage électronique (MEB) ou Diffraction d'électrons rétrodiffusés (EBSD). Cette observation pourra, de façon connue, être précédée d'une attaque chimique.

Les caractéristiques relatives au fonctionnement de l'installation 14, telles que l'intensité du courant dans les dispositifs 14 et 16, la température des sources froides intermédiaire 48 et externe 54, le débit de la source froide externe 54 sont notamment fonction de la taille de l'élément F, de son diamètre dans le cas d'un fil, et de la vitesse de défilement de l'élément F. Les valeurs de ces caractéristiques sont à la portée de l'homme du métier qui pourra les déterminer par essais successifs ou bien par calcul.

On a représenté sur la figure 8 un deuxième mode de réalisation d'une installation de traitement thermique d'élément de renfort pour pneumatique. Les éléments analogues à ceux représentés dans le premier mode de réalisation sont désignés par des références identiques.

A la différence du premier mode de réalisation, l'installation selon le deuxième mode de réalisation comprend plusieurs dispositifs de refroidissement 16 agencés en série en aval du dispositif de chauffage 14.

Les dispositifs de refroidissement 16 sont reliés entre eux par des conduits 58 de circulation de l'élément F. Ces conduits permettent également la circulation de la source froide intermédiaire 48. Les dispositifs de refroidissement 16 sont également reliés entre eux par des conduits 60 de circulation de la source froide externe 54.

L'invention ne se limite pas aux modes de réalisation précédemment décrits.

On pourra notamment envisager de traiter thermiquement simultanément plusieurs éléments de renfort dans un même dispositif de refroidissement. Ainsi, plusieurs éléments de renfort peuvent défiler dans les moyens d'extraction de calories ce qui permet d'augmenter davantage le débit massique total sans augmenter l'encombrement de l'installation de traitement thermique.

On pourra également envisager de superposer plusieurs installations de traitement thermique les unes au-dessus des autres afin de réduire l'encombrement au sol.

L'élément de renfort pourra être différent d'un fil, notamment différent d'un fil à section circulaire.

On pourra mettre en oeuvre le procédé de traitement thermique selon l'invention dans le cadre d'un procédé de fabrication différent de celui précédemment décrit. En particulier, on pourra utiliser un procédé de fabrication comprenant deux étapes de tréfilage en milieu sec ou deux étapes de tréfilage en milieu humide.

On pourra également combiner les caractéristiques des différents modes de réalisation décrits ou envisagés ci-dessus sous réserve que celles-ci soient compatibles entre elles.

On notera la grande facilité d'exploitation du procédé ainsi que l'encombrement réduit de l'installation décrits ci-dessus contrairement aux procédé et installation de US4767472 dans lequel la valeur relativement faible de la vitesse de défilement de l'installation est compensée par le traitement simultané de plusieurs dizaines de fils qui permet d'obtenir un débit massique total élevé en dépit d'un débit massique par fil, c'est-à-dire un débit massique unitaire, faible. De plus, dans US4767472, lorsque les bobines amont de stockage sont vides, il est nécessaire d'abouter l'extrémité de chaque fil à un autre fil provenant d'une bobine pleine. Il est donc nécessaire d'effectuer autant d'aboutage qu'il y a de fils, ce qui rend l'exploitation de l'installation de traitement thermique de US4767472 relativement complexe et fastidieuse. En outre, il est nécessaire de disposer d'autant de bobines qu'il y a de fils ce qui rend l'installation de traitement thermique de US4767472 relativement encombrante.

## Revendications

1. Procédé de traitement thermique d'un élément de renfort (F) en acier pour pneumatique, **caractérisé en ce qu'il** comprend une étape (204) d'abaissement de la température de l'élément de renfort (F) par refroidissement continu :
- depuis une température initiale (T2) du domaine austénitique de stabilité initial (I) de l'acier,
- jusqu'à une température finale (T3) du domaine ferrito-perlitique de stabilité final (IV) de l'acier,
- en passant dans au moins un domaine de transformation (II, III) de l'acier, le ou les domaines de transformation étant distincts du domaine bainitique,
l'étape d'abaissement de la température (204) comprenant une transformation (C2, C3) de la microstructure austénitique vers la microstructure ferrito-perlitique, la température de l'élément de renfort (F) étant strictement décroissante pendant l'étape d'abaissement (204), la vitesse moyenne d'abaissement de la température pendant la transformation (C2, C3) de la microstructure de l'acier étant supérieure ou égale à 30°C·s⁻¹ et inférieure ou égale à 110°C·s⁻¹.

2. Procédé selon la revendication 1, dans lequel la vitesse moyenne d'abaissement de la température pendant la transformation (C2, C3) de la microstructure de l'acier est supérieure ou égale à 40°C·s⁻¹, de préférence à 50°C·s⁻¹, plus préférentiellement à 60°C·s⁻¹ et encore plus préférentiellement à 70°C·s⁻¹.

3. Procédé selon la revendication 1 ou 2, dans lequel la vitesse moyenne d'abaissement de la température pendant la transformation (C2, C3) de la microstructure de l'acier est inférieure ou égale à 100°C·s⁻¹ et plus préférentiellement à 90°C·s⁻¹.

4. Procédé selon l'une quelconque des revendications précédentes, dans lequel la température finale (T3) est inférieure ou égale à 650°C, de préférence à 550°C et plus préférentiellement à 450°C.

5. Procédé selon l'une quelconque des revendications précédentes, dans lequel la transformation (C2, C3) de la microstructure de l'acier a lieu dans un intervalle de température (T2', T3') allant de 800°C à 400°C, de préférence de 750°C à 500°C et plus préférentiellement de 650°C à 550°C.

6. Procédé selon l'une quelconque des revendications précédentes, dans lequel on abaisse la température de plus de 30°C, de préférence de plus de 50°C, plus préférentiellement de plus de 75°C et encore plus préférentiellement de plus 100°C pendant la transformation (C2, C3) de la microstructure de l'acier.

7. Procédé selon l'une quelconque des revendications précédentes, dans lequel l'étape d'abaissement de la température (204) comprend un abaissement (C1) de la température de l'élément de renfort (F) dans le domaine de stabilité initial (I) de l'acier.

8. Procédé selon l'une quelconque des revendications précédentes, dans lequel l'étape d'abaissement de la température (204) comprend un abaissement (C4) de la température de l'élément de renfort (F) dans le domaine de stabilité final (IV) de l'acier.

9. Procédé selon l'une quelconque des revendications précédentes, dans lequel on transforme la microstructure de l'acier par traversée d'au moins un domaine de transformation (II, III).

10. Procédé selon la revendication 9, dans lequel le domaine de transformation (II, III) comprend le domaine de transformation ferritique (II).

11. Procédé selon la revendication 9 ou 10, dans lequel le domaine de transformation (II, III) comprend le domaine de transformation perlitique (III).

12. Procédé selon l'une quelconque des revendications précédentes, dans lequel, préalablement à l'étape d'abaissement de la température de l'élément de renfort (F), le procédé comprend une étape (200) d'augmentation de la température de l'élément de renfort (F) à une température (T1) supérieure ou égale à la température d'austénitisation de l'acier.

13. Procédé selon l'une quelconque des revendications précédentes, dans lequel la vitesse moyenne de défilement de l'élément de renfort (F) est strictement supérieure à 40 m·min⁻¹, de préférence strictement supérieure à 90 m·min⁻¹, plus préférentiellement supérieure ou égale à 200 m·min⁻¹ et encore plus préférentiellement supérieure ou égale à 300 m·min⁻¹.

14. Procédé selon l'une quelconque des revendications précédentes, dans lequel on apporte des calories à l'élément de renfort (F) pendant au moins une partie de l'étape d'abaissement de la température (204) de l'élément de renfort (F).

## Patentansprüche

1. Verfahren zur Wärmebehandlung eines Verstärkungselements (F) aus Stahl für einen Reifen, **dadurch gekennzeichnet, dass** es einen Schritt (204) zum Absenken der Temperatur des Verstärkungselements (F) durch kontinuierliches Abkühlen:
- von einer Anfangstemperatur (T2) des austenitischen Bereichs der Anfangsstabilität (I) des Stahls,
- bis zu einer Endtemperatur (T3) des ferritoperlitischen Bereichs der Endstabilität (IV) des Stahls,
- durch mindestens einen Umwandlungsbereich (II, III) des Stahls umfasst, wobei sich der oder die Umwandlungsbereich(e) vom bainitischen Bereich unterscheiden,
wobei der Schritt (204) zum Absenken der Temperatur eine Umwandlung (C2, C3) der austenitischen Mikrostruktur in ferrito-perlitische Mikrostruktur umfasst, wobei die Temperatur des Verstärkungselements (F) während des Schrittes (204) zum Absenken streng abnimmt, wobei die mittlere Absenkungsrate der Temperatur während der Umwandlung (C2, C3) der Stahlmikrostruktur größer oder gleich 30°C·s⁻¹ und kleiner oder gleich 110 °C·s⁻¹.

2. Verfahren nach Anspruch 1, wobei die mittlere Absenkungsrate der Temperatur während der Umwandlung (C2, C3) der Mikrostruktur des Stahls größer oder gleich 40 °C·s⁻¹, vorzugsweise 50 °C·s⁻¹, weiter vorzugsweise 60 °C·s⁻¹ und noch weiter vorzugsweise 70 °C·s⁻¹ ist.

3. Verfahren nach Anspruch 1 oder 2, wobei die mittlere Absenkungsrate der Temperatur während der Umwandlung (C2, C3) der Stahlmikrostruktur kleiner oder gleich 100 °C·s⁻¹ und weiter vorzugsweise 90 °C·s⁻¹ ist.

4. Verfahren nach einem der vorhergehenden Ansprüche, wobei die Endtemperatur (T3) kleiner oder gleich 650 °C, vorzugsweise 550 °C und weiter vorzugsweise 450 °C ist.

5. Verfahren nach einem der vorhergehenden Ansprüche, wobei die Umwandlung (C2, C3) der Stahlmikrostruktur in einem Temperaturbereich (T2', T3') von 800 °C bis 400 °C, vorzugsweise von 750 °C bis 500 °C und weiter vorzugsweise von 650 °C bis 550 °C erfolgt.

6. Verfahren nach einem der vorhergehenden Ansprüche, wobei die Temperatur um mehr als 30 °C, vorzugsweise um mehr als 50 °C, weiter vorzugsweise um mehr als 75 °C und noch weiter vorzugsweise um mehr als 100 °C während der Umwandlung (C2, C3) der Stahlmikrostruktur abgesenkt wird.

7. Verfahren nach einem der vorhergehenden Ansprüche, wobei der Schritt (204) zum Absenken der Temperatur das Absenken (C1) der Temperatur des Verstärkungselements (F) im Anfangsstabilitätsbereich (I) des Stahls umfasst.

8. Verfahren nach einem vorhergehenden Anspruch, wobei der Schritt (204) zum Absenken der Temperatur das Absenken (C4) der Temperatur des Verstärkungselements (F) im Endstabilitätsbereich (IV) des Stahls umfasst.

9. Verfahren nach einem der vorhergehenden Ansprüche, wobei die Mikrostruktur des Stahls über den Durchgang durch mindestens einen Umwandlungsbereich (II, III) transformiert wird.

10. Verfahren nach Anspruch 9, wobei der Umwandlungsbereich (II, III) den ferritischen Umwandlungsbereich (II) umfasst.

11. Verfahren nach Anspruch 9 oder 10, wobei der Umwandlungsbereich (II, III) den perlitischen Umwandlungsbereich (III) umfasst.

12. Verfahren nach einem der vorhergehenden Ansprüche, wobei vor dem Schritt zum Absenken der Temperatur des Verstärkungselements (F) das Verfahren einen Schritt (200) zum Erhöhen der Temperatur des Verstärkungselements (F) auf eine Temperatur (T1) größer oder gleich der Austenitisierungstemperatur des Stahls umfasst.

13. Verfahren nach einem der vorhergehenden Ansprüche, wobei die mittlere Laufgeschwindigkeit des Verstärkungselements (F) streng größer als 40 m·min⁻¹, vorzugsweise streng größer als 90 m·min⁻¹, weiter vorzugsweise größer oder gleich 200 m·min⁻¹ und noch weiter vorzugsweise größer oder gleich 300 m·min⁻¹ ist.

14. Verfahren nach einem der vorhergehenden Ansprüche, wobei dem Verstärkungselement (F) während mindestens eines Teils des Schrittes (204) zum Absenken der Temperatur des Verstärkungselements (F) Wärme zugeführt wird.

## Claims

1. Method for the heat treatment of a steel reinforcing element (F) for a tyre, **characterized in that** it comprises a step (204) of reducing the temperature of the reinforcing element (F) by continuous cooling:
- from an initial temperature (T2) of the initial austenite stability range (I) of the steel,
- to a final temperature (T3) of the final ferrite-pearlite stability range (IV) of the steel,
- passing through at least one transformation range (II, III) of the steel, the transformation range(s) being distinct from the bainite range,
the temperature reduction step (204) comprising a transformation (C2, C3) from the austenitic microstructure to the ferritic-pearlitic microstructure, the temperature of the reinforcing element (F) being strictly decreasing during the reduction step (204), the mean rate of temperature reduction during the transformation (C2, C3) of the steel microstructure being greater than or equal to 30°C·s⁻¹ and less than or equal to 110°C·s⁻¹.

2. Method according to Claim 1, in which the mean rate of temperature reduction during the transformation (C2, C3) of the steel microstructure is greater than or equal to 40°C·s⁻¹, preferably greater than 50°C·s⁻¹, more preferably greater than 60°C·s⁻¹, and still more preferably greater than 70°C·s⁻¹.

3. Method according to Claim 1 or 2, in which the mean rate of temperature reduction during the transformation (C2, C3) of the steel microstructure is less than or equal to 100°C·s⁻¹., more preferably less than 90°C·s⁻¹.

4. Method according to any one of the preceding claims, in which the final temperature (T3) is less than or equal to 650°C, preferably to 550°C and more preferentially to 450°C.

5. Method according to any one of the preceding claims, in which the transformation (C2, C3) of the steel microstructure takes place in a temperature range (T2', T3') extending from 800°C to 400°C, preferably from 750°C to 500°C and more preferentially from 650°C to 550°C.

6. Method according to any one of the preceding claims, in which the temperature is reduced by more than 30°C, preferably by more than 50°C, more preferably by more than 75°C, and still more preferably by more than 100°C during the transformation (C2, C3) of the steel microstructure.

7. Method according to any one of the preceding claims, in which the temperature reduction step (204) comprises a reduction (C1) in the temperature of the reinforcing element (F) in the initial stability range (I) of the steel.

8. Method according to any one of the preceding claims, in which the temperature reduction step (204) comprises a reduction (C4) in the temperature of the reinforcing element (F) in the final stability range (IV) of the steel.

9. Method according to any one of the preceding claims, in which the steel microstructure is transformed by passing through at least one transformation range (II, III).

10. Method according to Claim 9, in which the transformation range (II, III) comprises the ferrite transformation range (II).

11. Method according to Claim 9 or 10, in which the transformation range (II, III) comprises the pearlite transformation range (III).

12. Method according to any one of the preceding claims, in which, prior to the step of reducing the temperature of the reinforcing element (F), the method comprises a step (200) of increasing the temperature of the reinforcing element (F) to a temperature (T1) greater than or equal to the austenitizing temperature of the steel.

13. Method according to any one of the preceding claims, in which the mean run speed of the reinforcing element (F) is strictly greater than 40 m.min⁻¹, preferably strictly greater than 90 m.min⁻¹, more preferably greater than or equal to 200 m.min⁻¹ and still more preferably greater than or equal to 300 m.min⁻¹.

14. Method according to any one of the preceding claims, in which heat is supplied to the reinforcing element (F) during at least one part of the step (204) of reducing the temperature of the reinforcing element (F).
